# EUROPÄISCHE PATENTANMELDUNG

(11) **EP 2 589 842 A1**
(43) Veröffentlichungstag der Anmeldung: **08.05.2013**
(21) Anmeldenummer: 12190861.0
(22) Anmeldetag: 31.10.2012
(51) Int. Cl.: F16J 15/32, F16J 15/56, F15B 15/14

(54) **Dichtring mit Führungselement**

(30) Priorität: 02.11.2011 DE 102011117820
(71) Anmelder: Parker Hannifin Manufacturing Germany GmbH & Co. KG, 74321 Bietigheim-Bissingen (DE)
(72) Erfinder: Schröppel, Winfried, 72800 Eningen (DE); Klein, Dr. Patrick, 70771 Leinfelden-Echterdingen (DE)
(74) Vertreter: Witte, Weller & Partner

(57) **Zusammenfassung**

Die vorliegende Erfindung betrifft einen Dichtring (10) zur Aufnahme in einem Einbauraum (5) zwischen einem ruhenden Maschinenteil (3) und einem beweglichen Maschinenteil (4). Der vorgeschlagene Dichtring (10) umfasst einen Ringkörper (12) mit i) einem Dichtbereich (20) mit einer statischen Dichtlippe (30) und einer dynamischen Dichtlippe (32), ii) einem dem Dichtbereich gegenüber angeordneten Abstreifbereich (22) mit einer Abstreiflippe (40) zur Anlage an dem beweglichen Maschinenteil (4) und einem Schmutzschild (42) zur Anlage an dem ruhenden Maschinenteil (3), und iii) einem zwischen Dichtbereich (20) und Abstreifbereich (22) angeordneten Führungsbereich (24), und ein Führungselement (14), das in dem Führungsbereich (24) zur Anlage an dem beweglichen Maschinenteil (4) angeordnet ist.

## Beschreibung

Die vorliegende Erfindung betrifft einen Dichtring zur Aufnahme in einem Einbauraum zwischen einem ruhenden Maschinenteil und einem beweglichen Maschinenteil. Die Erfindung betrifft insbesondere einen Dichtring für pneumatische Anwendungen, etwa für Kolbenstangen von Pneumatikzylindern.

Dichtringe für pneumatische Anwendungen sind in großer Vielzahl bekannt. Aus der DE 103 49 917 A1 ist ein ringförmiges Dicht-, Abstreif- und Führungselement für die Kolbenstange von Pneumatikzylindern bekannt. Dieses umfasst ein genutetes, hochdruckseitig geöffnetes Dichtteil mit einer statischen Dichtlippe, die sich dichtend an die Wandung des im Zylindergehäuse vorhandenen Einbauraums für das Element legt, und einer dynamischen Dichtlippe, die sich dichtend an die Stange legt. Ferner sind ein mit dem Dichtteil vereinigtes Abstreifteil mit einer niederdruckseitigen Abstreiflippe, die sich an die Stange legt, und ein am Zylindergehäuse gelagertes, von der Stange getragenes Führungsteil vorgesehen. Das Führungsteil ist axial zwischen dem Dicht- und dem Abstreifteil angeordnet und einstückig ausgebildet, ist im Einbauraum für den Dicht- und den Abstreifteil gelagert und bildet mit diesem eine massive Einheit aus zumindest angenähert homogenem Material.

Aus der DE 101 62 688 A1 ist ein Dichtring bekannt umfassend einen Ringkörper aus elastomerem Werkstoff mit einem Klemmwulst, der formschlüssig in eine Ausnehmung des Einbauraums des Dichtrings einschnappbar ist. Der Klemmwulst ist durch einen ringförmig ausgebildeten Federkörper gebildet.

Aus der DE 36 01 746 A1 ist eine pneumatische Kolben-ZylinderAnordnung bekannt mit einem Zylinder und einem darin axial bewegbar geführten Kolben, der an einer die axiale Stirnseite des Zylinders durchdringenden Kolbenstange befestigt ist. Ferner ist ein Dichtungsring mit Dichtlippe aus verhältnismäßig weichem Material mit gummielastischen Eigenschaften vorgesehen sowie ein Abstreifring mit Abstreiflippe aus härterem Material, zum Beispiel Hartkunststoff oder Metall, der die Kolbenstange bei deren Bewegung am Außenumfang säubert. Die beiden Ringe sind am Zylinder angelegt und umgeben die Kolbenstange koaxial. Ferner ist dort vorgesehen, dass die Dichtlippe und die Abstreiflippe Bestandteile eines gemeinsamen, ein einziges Bauteil bildenden Dicht- und Abstreifringes sind, an dem die beiden Lippen fest miteinander verbunden angeordnet sind.

Ferner vertreibt die Anmelderin unterschiedlichste Pneumatik-Dichtungen, beispielsweise unter den Bezeichnungen "EU", "E7", "E8", "E9", "EP", welche (abgesehen von den Dichtring mit der Bezeichnung "EP") in einen identischen Einbauraum eingebaut werden können.

Für Pneumatikanwendungen im Lebensmittelbereich, in Bereichen mit erhöhter Schmutzbeaufschlagung sowie Bereichen, bei denen platzsparende und gewichtsreduzierte Zylinder benötigt werden, sind die bekannten Dichtringe nur bedingt einsetzbar oder ermöglichen Schmutzansammlungen an schwer zugänglichen Stellen.

Der vorliegenden Erfindung liegt deshalb die Aufgabe zugrunde, einen Dichtring zur Aufnahme in einem Einbauraum zwischen einem ruhenden Maschinenteil und einem beweglichen Maschinenteil, insbesondere in einem Standard-Einbauraum wie etwa dem Einbauraum für die oben genannten Dichtringe, insbesondere für die von der Anmelderin vertriebenen Dichtringe, zu schaffen, die für Anwendungen im Lebensmittelbereich oder in anderen Bereichen mit erhöhter Schmutzbeaufschlagung geeignet sind und eine einfache Reinigung ermöglichen bzw. möglichst keine Schmutzansammlung an schwer zugänglichen Stellen erlauben.

Diese Aufgabe wird erfindungsgemäß durch einen Dichtring gelöst umfassend
- einen Ringkörper mit
   i) einem Dichtbereich mit einer statischen Dichtlippe und einer dynamischen Dichtlippe,
   ii) einem dem Dichtbereich gegenüber angeordneten Abstreifbereich mit einer Abstreiflippe zur Anlage an dem beweglichen Maschinenteil und einem Schmutzschild zur Anlage an dem ruhenden Maschinenteil, und
   iii) einem zwischen Dichtbereich und Abstreifbereich angeordneten Führungsbereich, und
- ein Führungselement, das in dem Führungsbereich zur Anlage an dem beweglichen Maschinenteil angeordnet ist.

Der vorgeschlagene Dichtring bzw. eine gesamte Dichtungsanordnung aus Zylindergehäuse (dem ruhenden Maschinenteil), Kolbenstange (dem beweglichen Maschinenteil) und dem in dem dazwischen liegenden Einbauraum eingebauten Dichtring lässt sich insbesondere aufgrund des an dem Ringkörper vorgesehenen Schmutzschild einfacher reinigen als die bekannten Dichtringe, die häufig niederdruckseitig tiefe Nuten oder Zwischenräume aufweisen, in denen sich Schmutz festsetzen kann. Derartige Kavitäten werden durch das erfindungsgemäß vorgesehene Schmutzschild, das in eingebautem Zustand an dem ruhenden Maschinenteil anliegt, vermieden, so dass sich erst gar kein Schmutz ansammeln kann bzw. dort angesammelter Schmutz auch einfacher gereinigt werden kann. Ferner wird dadurch erreicht, dass Reinigungsflüssigkeiten einfacher ablaufen und weniger lang in Kontakt mit dem Dichtring verweilen, der Dichtring also weniger durch derartige Reinigungsflüssigkeiten angegriffen wird. Ferner verhindert das Schmutzschild außerdem das Eindringen von Schmutz in den Zylinder über den Dichtungsrücken, also über den Bereich zwischen dem ruhenden Maschinenteil und dem Dichtring.

Ferner ist bei dem erfindungsgemäßen Dichtring ein integriertes Führungselement vorgesehen, wodurch in der Konstruktion des Zylindergehäuses auf eine weitere Führungsnut und Führung verzichtet werden kann. Dies ermöglicht die Herstellung von Zylindern mit geringerer Baulänge sowie geringerem Gewicht als es mit den bekannten Dichtringen grundsätzlich möglich ist. Bekannte Dichtringe für einen Standard-Einbauraum haben keine integrierte Führung. Die DE 3601746 C2 beschreibt zwar einen solchen Dichtring, jedoch hat sich diese Dichtung nicht durchsetzen können, da die Verschleiß- und Gleiteigenschaften des Ringkörpers nicht ausreichend gut sind. Durch ein integriertes Führungselement aus einem besser geeigneten Werkstoff können gute Führungseigenschaften erzielt werden, wie sie auch bei separat im Gehäuse angeordneten Führungselementen erzielt werden. So kann bei Verwendung des erfindungsgemäßen Dichtrings auf ein separates Führungselement verzichtet und somit mindestens die Baulänge eines separaten Führungselementes (je nach Nenndurchmesser ca. 5 bis 20mm) eingespart werden. Ferner hat die Integration des Führungselementes in den Dichtring den Vorteil, dass auch die präzise Bearbeitung einer Nut für das sonst benötigte separate Führungselement entfällt, da Dichtring und integrierter Führungsring bereits in hohem Maße konzentrisch zueinander sind.

Schließlich ist niederdruckseitig auch eine Abstreiflippe zur Anlage an dem beweglichen Maschinenteil vorgesehen.

Trotz des zusätzlich bei dem erfindungsgemäßen Dichtring vorgesehenen Schmutzschildes und Führungselements ist es möglich, den Dichtring so auszugestalten, dass er in Standard-Einbauräume eingesetzt werden kann, beispielsweise in den Standard-Einbauraum für die von der Anmelderin unter den oben genannten Bezeichnungen vertriebenen Dichtringe für Pneumatikanwendungen. Grundsätzlich lässt sich der Dichtring aber auch anders ausgestalten, beispielsweise für den Einbau in spezielle Einbauräume, insbesondere anders gestaltete Standard-Einbauräume. Durch die erfindungsgemäße Gestaltung und Positionierung des Führungselementes und ggf. die in bevorzugten Ausgestaltungen vorgesehene vorteilhafte Werkstoffwahl ist es möglich, in diesem beengten Einbauraum alle Funktionen unterzubringen.

In einer bevorzugten Ausgestaltung ist vorgesehen, dass die in radialer Richtung außen und/oder innen liegende Oberfläche des Führungselements mehrfach in axialer Richtung durchbrochen ist und dass die Durchbrüche mit Material des Ringkörpers gefüllt sind. Dies ermöglicht es, dass der für den Ringkörper verwendete Dichtungswerkstoff, der grundsätzlich weicher ist als der für das Führungselement verwendete Werkstoff, auf beide Seiten (in axialer Richtung gesehen) des Führungselements gelangen kann. Dies ist insbesondere von Vorteil, wenn der Ringkörper bzw. der gesamte Dichtring durch 2K-Spritzguss oder durch Über-/Anspritzen an ein Einlegeteil hergestellt wird.

Alternativ wird dies bei einer Ausgestaltung des Dichtrings ermöglicht, bei der das Führungselement mehrere in axialer Richtung verlaufende Durchgangsbohrungen aufweist. Diese Durchgangsbohrungen sind dann nach Herstellung des Dichtrings mit Material des Ringkörpers gefüllt.

Die Durchbrüche (bzw. Ausnehmungen) und/oder die Durchgangsbohrungen sind bevorzugt gleichmäßig über das Führungselement in Umfangsrichtung verteilt. Es ist jedoch auch denkbar, dass die Durchbrüche und/oder Durchgangsbohrungen ungleichmäßig verteilt sind, wodurch die radiale Steifigkeit an einer Stelle als Montagehilfe besonders reduziert werden kann.

In einer weiteren Ausgestaltung ist vorgesehen, dass der Führungsbereich an seiner zur Anlage an dem ruhenden Maschinenteil vorgesehenen Oberfläche einen vorstehenden Haltewulst zur Einbringung in eine entsprechende Haltenut in dem ruhenden Maschinenteil aufweist. Die bekannten Einbauräume, insbesondere die Standard-Einbauräume, wie sie für die Einbringung der oben genannten Dichtringe der Anmelderin vorgesehen sind, weisen grundsätzlich eine solche Haltenut auf. Haltewulst und Haltenut gewährleisten eine haltbare und definierte Klemmung des Dichtrings im Einbauraum entlang des gesamten Umfangs. Insbesondere wird dadurch eine sichere axiale Fixierung erzielt.

Bevorzugt ist das Führungselement in axialer Richtung teilweise unterhalb des Haltewulstes angeordnet und weist dort eine in radialer Richtung geringere Dicke auf als der nicht unterhalb des Haltewulstes angeordnete Teil des Führungselements. Insbesondere weist der in axialer Richtung unterhalb des Haltewulstes angeordnete Teil des Führungselements eine Ausnehmung, beispielsweise eine Fase, auf, die vorteilhafterweise in Richtung der Hochdruckseite zum beweglichen Maschinenteil hin geneigt ist. Dadurch wird im Bereich unterhalb des Haltewulstes die radiale Steifigkeit des Dichtrings insgesamt reduziert, um die Montage des Dichtrings, insbesondere das Einschnappen des Haltwulstes in die Haltenut, zu erleichtern.

Eine haltbare und definierte Klemmung des Dichtrings im Einbauraum wird alternativ auch dadurch erreicht, dass das Führungselement mindestens ein Halteelement, insbesondere mindestens einen Haltevorsprung oder Schnapphaken, an seiner radial außen liegenden Oberfläche aufweist, der über die zur Anlage an dem ruhenden Maschinenteil vorgesehene Oberfläche des Führungsbereichs vorsteht und zur Einbringung in eine entsprechende Haltenut in dem ruhenden Maschinenteil vorgesehen ist. Bei einer solchen Ausgestaltung weist also nicht der Führungsbereich des Ringkörpers einen Haltewulst auf, sondern das Führungselement ist entsprechend mit einem oder mehreren Halteelementen versehen. Die Ausgestaltung des Einbauraums ist jedoch unabhängig davon, ob ein Haltewulst am Führungsbereich des Ringkörpers oder ein Halteelement am Führungselement vorgesehen ist.

Sowohl der Haltewulst als auch das Halteelement können grundsätzlich in Umfangsrichtung durchgängig ausgestaltet sein, um entlang des Umfangs eine möglichst gute Klemmung des Dichtrings im Einbauraum zu erreichen. Alternativ ist auch denkbar, dass der Haltewulst bzw. das Halteelement in mehrere Haltwulstbereiche bzw. in mehrere Halteelementbereiche unterteilt ist, die möglichst gleichmäßig oder auch ungleichmäßig über den Umfang verteilt sind.

Zur Anlage an dem beweglichen Maschinenteil weist das Führungselement bevorzugt eine im Wesentlichen zylindrische Anlagefläche an seiner zur Anlage an einem beweglichen Maschinenteil vorgesehenen Oberfläche zur Erzielung einer Flächenpressung im Betrieb auf. Diese Anlagefläche kann beispielsweise glatt sein. Um ein Abstreifen des Schmierfilms zu verhindern, ist die in axialer Richtung liegende vordere und/oder hintere, die Anlagefläche begrenzende Kante des Führungselements ferner optional angefast oder abgerundet. Die im Wesentlichen zylindrische Führungsfläche kann auch mit Strukturen ausgestaltet sein, z.B. mehreren hintereinander angeordneten Rillen, Nuten oder Schmiertaschen, die sich positiv auf das Reibungs- und Stick-Slip-Verhalten (Ruckgleiten) auswirken.

Zur Anlage an dem ruhenden Maschinenteil weist der Führungsbereich eine im Wesentlichen zylindrische, insbesondere glatte, in axialer Richtung verlaufende, zur Anlage an dem ruhenden Maschinenteil vorgesehene Abstützfläche auf. Diese Abstützfläche, die insbesondere zur Abstützung radialer Führungskräfte dient, ist bevorzugt zwischen dem Schmutzschild und einem bevorzugt vorgesehenen Haltewulst bzw. Halteelement angeordnet.

Das Schmutzschild ist bevorzugt als im Wesentlichen in radialer Richtung verlaufende Schmutzschildlippe zur Anlage an eine im Wesentlichen in radialer Richtung verlaufende Anlagefläche des ruhenden Maschinenteils ausgestaltet. Dadurch wird wirksam verhindert, dass Schmutz zwischen die radial außen liegende Oberseite des Dichtrings und das ruhende Maschinenteil gelangen kann. Außerdem ermöglicht dies eine besonders einfache Reinigung des Dichtrings bzw. der gesamten Dichtungsanordnung.

Grundsätzlich ist der Ringkörper aus weicherem Material hergestellt als das Führungselement. Als bevorzugte Werkstoffe für die Herstellung des Führungselements eignen sich insbesondere thermoplastische Kunststoffe, Duromere, Hartgewebestoffe, faserverstärkte Thermoplaste, faserverstärkte Duromere oder auch metallische Führungswerkstoffe, beispielsweise Bronze oder Messing.

Der Ringkörper besteht bevorzugt aus einem Werkstoff, der eine Herstellung des Ringkörpers durch Spritzguss, insbesondere 2K-Spritzguss, oder Überspritzen oder Anspritzen eines Einlegeteils ermöglicht. Bevorzugte Werkstoffe sind Polyurethan oder Elastomere.

Grundsätzlich ist darauf zu achten, dass der Dichtring aus einem Material besteht, das ausreichend beständig gegen Reinigungsflüssigkeiten ist, die bei dem jeweiligen Anwendungszweck eingesetzt werden.

Ferner ist grundsätzlich die Abstreiflippe Teil des Ringkörpers und aus dem gleichen Werkstoff hergestellt wie die restlichen Bestandteile des Ringkörpers. In einer alternativen Ausgestaltung ist vorgesehen, dass die Abstreiflippe aus dem gleichen Werkstoff besteht wie das Führungselement. Eine solche Ausführungsform ist bevorzugt, wenn der abzustreifende Schmutz zur Anhaftung auf der Kolbenstange neigt. Dann sollte die Abstreiflippe deutlich stabiler ausgeführt werden, um den anhaftenden Schmutz sicher abstreifen zu können, ohne dass die Abstreiflippe im schlimmsten Fall umgestülpt wird. In diesem Fall wäre ein harter Kunststoff vorteilhaft. Aus diesem Grund bietet es sich an, den Abstreiferteil und den Führungsteil aus demselben Werkstoff herzustellen. Zudem sind härtere Thermoplaste auch widerstandsfähiger gegen Verschleiß.

Die Erfindung wird nachfolgend anhand der Zeichnungen näher erläutert. Es zeigen:
- Figur 1: einen ersten Querschnitt durch eine erste Ausführungsform eines erfindungsgemäßen Dichtrings,
- Figur 2: einen zweiten Querschnitt durch die erste Ausführungsform eines erfindungsgemäßen Dichtrings,
- Figur 3: den in Figur 2 gezeigten Querschnitt zusammen mit dem Einbauraum in entspanntem Zustand,
- Figur 4: den in Figur 1 gezeigten Querschnitt im in den Einbauraum eingebauten Zustand,
- Figur 5: eine perspektivische Ansicht der ersten Ausführungsform des Dichtrings,
- Figur 6: eine Seitenansicht einer ersten Ausgestaltung eines Teils des Führungselements,
- Figur 7: eine perspektivische Ansicht einer zweiten Ausführungsform des Führungselements,
- Figur 8: einen Querschnitt durch eine dritte Ausführungsform des Führungselements,

- Figur 9: einen Querschnitt durch eine zweite Ausführungsform des erfindungsgemäßen Dichtrings,
- Figur 10: einen Querschnitt durch eine dritte Ausführungsform des erfindungsgemäßen Dichtrings, und
- Figur 11: einen Querschnitt durch eine vierte Ausführungsform des erfindungsgemäßen Dichtrings.

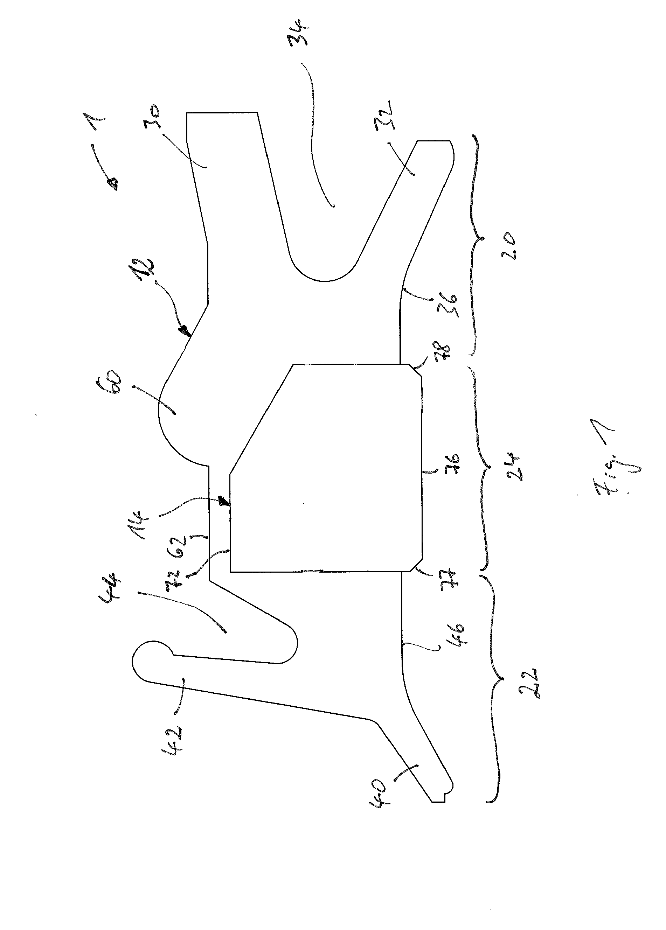

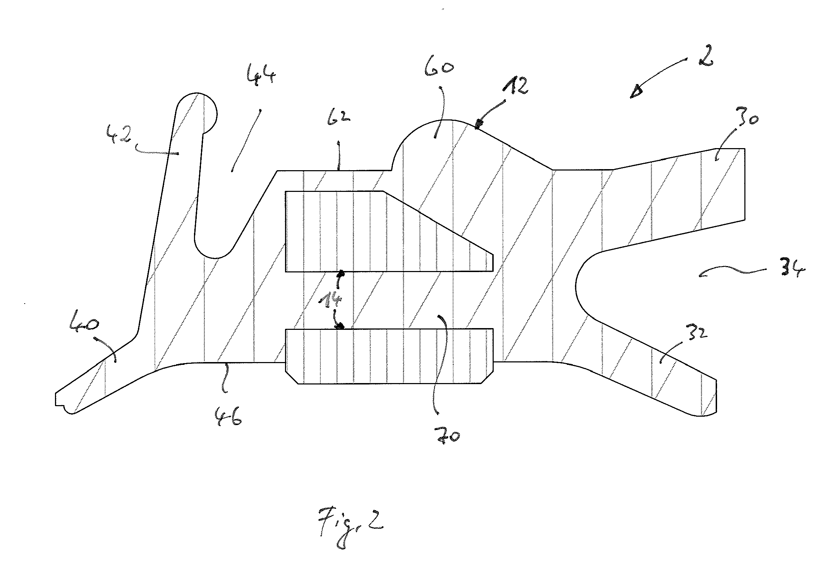

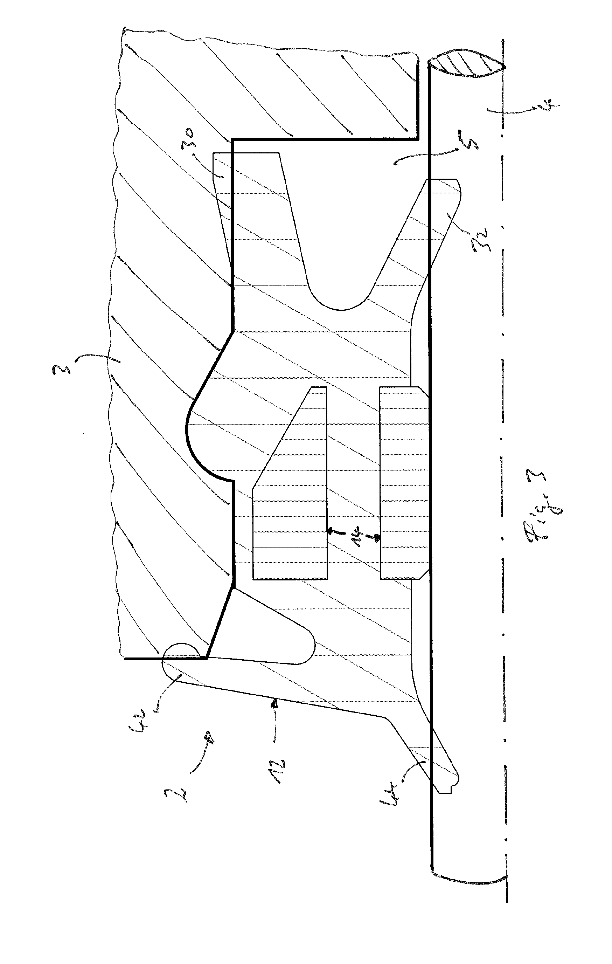

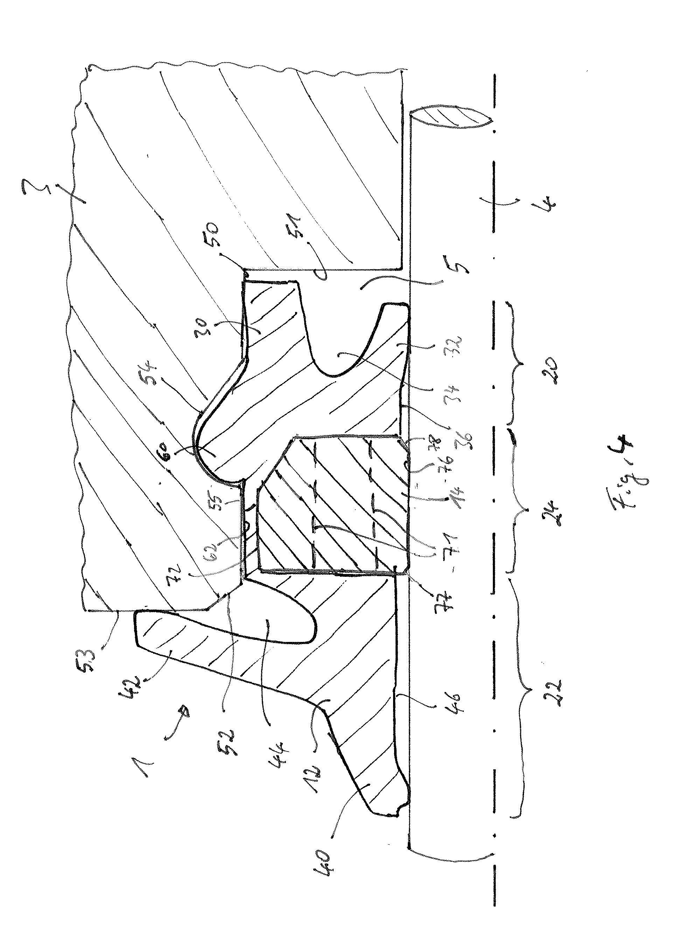

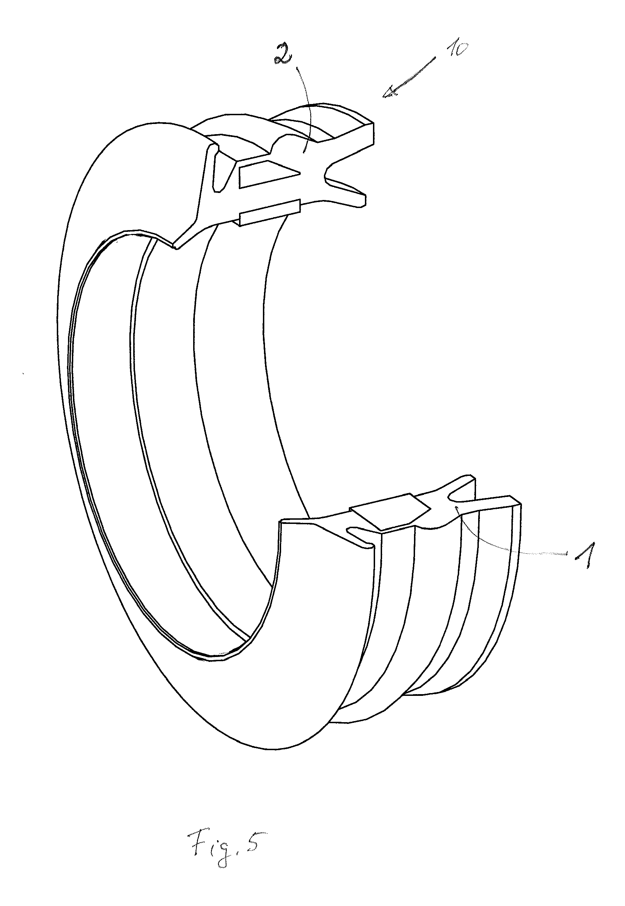

Die Figuren 1 bis 4 zeigen verschiedene Querschnitte durch eine erste Ausführungsform eines erfindungsgemäßen Dichtrings 10. Figur 5 zeigt eine perspektivische Darstellung eines solchen Dichtrings 10, wobei ein Teil des Dichtrings 10 zwecks besserer Darstellung der verschiedenen Querschnitte ausgeblendet ist. Figur 1 zeigt den in Figur 5 mit 1 bezeichneten Querschnitt durch den Dichtring 10. Figur 2 zeigt den in Figur 5 mit 2 bezeichneten Querschnitt des Dichtrings 10, Figur 3 zeigt den in Figur 2 gezeigten Querschnitt des Dichtrings in entspanntem Zustand zusammen mit dem Einbauraum. Figur 4 zeigt den in Figur 1 gezeigten Querschnitt 1 des Dichtrings 10 im in den Einbauraum eingebauten Zustand.

Erfindungsgemäß weist der Dichtring 10 einen Ringkörper 12 und ein Führungselement 14 auf. Der Ringkörper 12 kann in verschiedene Bereiche unterteilt werden, nämlich einen Dichtbereich 20, einen dem Dichtbereich 20 gegenüber angeordneten Abstreifbereich 22 und einen zwischen Dichtbereich 20 und Abstreifbereich 22 angeordneten Führungsbereich 24, in dem das Führungselement 14 angeordnet ist. In dem Dichtbereich 20 weist der Dichtring 10 eine statische Dichtlippe 30 zur Anlage an einem ruhenden Maschinenteil 3 (vgl. Figuren 3 und 4), also insbesondere einem Zylinder, und eine dynamische Dichtlippe 32 zur Anlage an einem beweglichen Maschinenteil 4, insbesondere einer Kolbenstange, auf. In dem Dichtbereich 22 weist der Dichtring 10 eine Abstreiflippe 40 zur Anlage an den beweglichen Maschinenteil 4 und ein Schmutzschild 42 zur Anlage an dem ruhenden Maschinenteil 3 auf.

Der Einbau des Dichtrings 10 in den zwischen dem ruhenden Maschinenteil 3 und dem beweglichen Maschinenteil 4 gebildeten Einbauraum 5 ist in den Figuren 3 und 4 gezeigt, wobei der Dichtring 10 in der Figur 3 in entspanntem Zustand und in Figur 4 in eingebautem Zustand gezeigt ist. Wie insbesondere aus Figur 5 zu erkennen ist, berührt die statische Dichtlippe 30 dichtend zumindest den axialen Grund 50 des Einbauraums 5, also die entsprechende Wandung des ruhenden Maschinenteils 3. Optional kann die statische Dichtlippe auch so ausgebildet sein, dass sie zusätzlich auch die Seitenwandung 51 des Einbauraums dichtend berührt. Die dynamische Dichtlippe 32, die von der statischen Dichtlippe 30 durch eine V-förmig profilierte Ringnut 34, die sich zur Hochdruckseite hin öffnet, getrennt ist, berührt dichtend nur die Oberfläche des beweglichen Maschinenteils 4.

Zur Niederdruckseite hin berührt die Abstreiflippe 40 die Oberfläche des beweglichen Maschinenteils 4 und dient dort insbesondere zur Abstreifung von auf der Oberfläche des beweglichen Maschinenteils 4 befindlichen Schmutzes. Das Schmutzschild 42 ist so ausgebildet, dass es in radialer Richtung über den Eckbereich 52 des Einbauraums hinaussteht und dort die zur Niederdruckseite hin weisende, in radialer Richtung verlaufende Seitenwandung 53 des ruhenden Maschinenteils 3 berührt. Dadurch wird verhindert, dass in den Einbauraum 5 über den Weg zwischen radial außen liegender Oberfläche des Dichtrings 10 und die gegenüberliegenden Wandungen 51, 52, 50 des ruhenden Maschinenteils 3 Schmutz eindringen kann, wie dies bei bekannten Dichtringen der Fall ist, der dort dann nur schwer gereinigt werden kann. Durch diese Ausgestaltung des Schmutzschildes 42 werden somit Kavitäten vermieden, in denen sich Schmutz ansammeln kann. Zudem können Reinigungsflüssigkeiten einfacher an den niederdruckseitigen Oberflächen des Dichtrings 10 ablaufen und verweilen somit weniger lange in Kontakt mit dem Dichtring, was insbesondere bei aggressiven Reinigungsflüssigkeiten zur Vermeidung von Schäden des Dichtrings vorteilhaft ist.

Das Schmutzschild 42 ist ferner so ausgebildet, dass es in eingebautem Zustand mit einem ausreichenden Druck gegen die Seitenwandung 53 drückt, so dass sich auch im Betrieb möglichst kein Abstand zwischen Schmutzschild 42 und Seitenwandung 53 ergibt, über den wieder Schmutz in den Einbauraum 5 eindringen könnte. Der Dichtring 10 weist dazu zwischen dem Schmutzschild 42 und dem angrenzenden Führungsbereich 24, also dem Eckbereich 52 gegenüberliegend, eine Ausnehmung 44 auf. Diese Ausnehmung 44 erlaubt die Gestaltung einer längeren Schmutzschildlippe 42 und damit einen längeren elastischen Verformungsbereich der Schmutzschildlippe 42 im Vergleich zu einer sehr kurzen Lippe.

Der Einbauraum 5, der vorliegend einem Standard-Einbauraum für Dichtringe der von der Anmelderin vertriebenen Typen EU, E7, E8 und E9 entspricht, weist ferner an seiner radial außen liegenden Seite einen in der Seitenwandung 50 des ruhenden Maschinenteils gebildete Haltenut 54 auf. In diese greift ein an der radial außen liegenden Oberseite des Dichtrings im Übergangsbereich zwischen Führungsbereich 24 und Dichtbereich 20 vorgesehener Haltewulst 60 ein. Durch diese Ausgestaltung von Haltewulst 60 und Haltenut 54, die zueinander korrespondierend ausgestaltet sind, wird eine haltbare und definierte Klemmung des Dichtrings 10 im Einbauraum 5 entlang des gesamten Umfangs erreicht, insbesondere eine sichere axiale Fixierung. Der Haltewulst 60 kann dabei, wie in Figur 5 zu erkennen ist, in Umfangsrichtung durchgängig ausgestaltet sein, kann alternativ aber auch mehrfach geschlitzt sein oder in einzelne Haltewulstbereiche unterteilt sein.

Unter "Standardeinbauraum" wird allgemein ein Einbauraum verstanden, für den es Katalogartikel gibt und der bei hoher Marktdurchdringung auch ggf. von anderen Herstellern für deren Produkte übernommen wurde. Beispielsweise wird der hier gezeigte Einbauraum für das Profil EU, E9 der Anmelderin mit sehr ähnlichen Dichtelementen auch von Produkten anderer Hersteller bedient. Die Anwender der Dichtelemente können dann auf verschiedene Hersteller zurückgreifen, ohne ihre Einbauräume verändern zu müssen. Ferner kann eine Standardeinbauraum grundsätzlich für mehrere Dichtungen oder Dichtungstypen genutzt werden.

Beispielhafte Abmessungen oder Abmessungsverhältnisse der Standardnut sind z.B. etwa die bevorzugte radiale Höhe des Einbauraums h x die axiale Länge L des Einbauraums von z.B. 5x13, 5x14, 5x15mm oder ein Höhen/Längenverhältnis von etwa h/L= 0,3 bis 0,4 (ohne Berücksichtigung der Haltenut). Der bevorzugte Abstand der Haltenut 54 von der Stirnfläche 53 beträgt beispielsweise etwa dem 0,25- bis 0,5-fachen der axialen Einbauraumlänge L.

Zur Abstützung der radialen Führungskräfte weist der Dichtring 10 im Führungsbereich 24 zwischen dem Haltewulst 60 und dem Schmutzschild 42 eine in axialer Richtung verlaufende Abstützfläche 62 auf, die sich an einer entsprechenden Anlagefläche 55 des ruhenden Maschinenteils 3 abstützt. Ferner sind auch die zum beweglichen Maschinenteil 4 hin gerichteten Oberflächen 46 und 36 des Dichtrings 10 bevorzugt als glatte Flächen ausgebildet, die einfach zu reinigen sind.

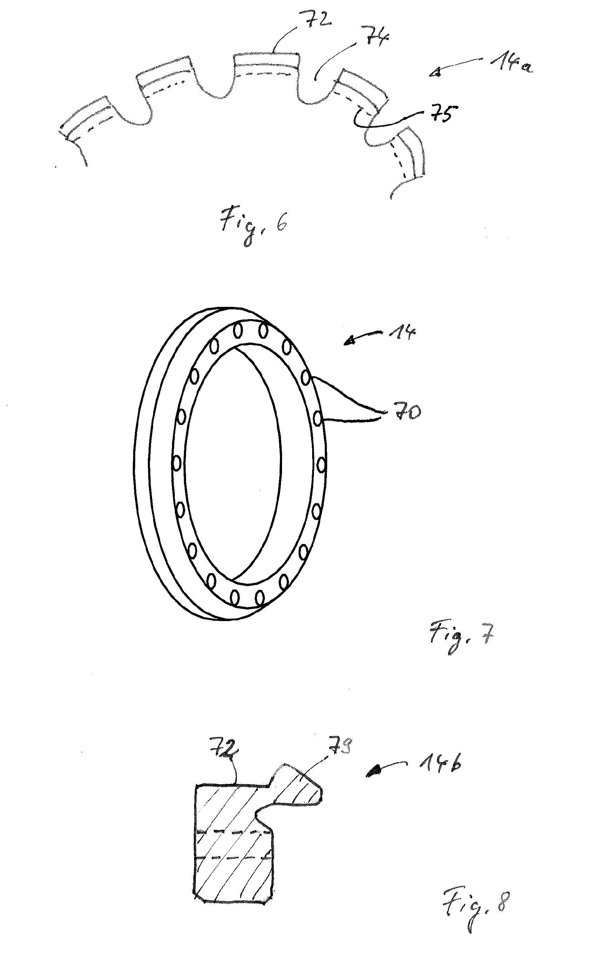

Das Führungselement 14 weist, wie insbesondere in den Figuren 1 und 4 zu erkennen ist, grob einen rechteckförmigen Querschnitt auf, wobei der in axialer Richtung unterhalb des Haltewulstes 60 angeordnete Bereich eine in radialer Richtung gesehen geringere Dicke aufweist als der nicht unterhalb des Haltewulstes 60 angeordnete Teil des Führungselements. Das Führungselement 14 ist also in diesem Bereich angefast, um in diesem Bereich die radiale Steifigkeit des Dichtrings, die grundsätzlich durch dieses Führungselement 14 gewährleistet wird, zu reduzieren und so die Montage des Dichtrings 10 in dem Einbauraum 5 zu erleichtern. Bei der in den Figuren 1 bis 5 gezeigten Ausgestaltung des Führungselements 14 ist dieses an mehreren, insbesondere gleichmäßig verteilt angeordneten Stellen in Umfangsrichtung durchbrochen, beispielsweise mittels Durchgangsbohrungen 70, wie sie in den in den Figuren 1 und 2 gezeigten Querschnitten erkennbar sind und in Figur 4 durch gestrichelte Linien 71 angedeutet sind. Eine perspektivische Darstellung eines solchen Führungselements 14 ist in Figur 7 gezeigt. Dort sind insbesondere die gleichmäßig in Umfangsrichtung verteilt angeordneten Durchgangsbohrungen 70 erkennbar. Diese dienen dazu, dass der weiche Dichtungswerkstoff des Ringelements 12 auf beide Seiten des Führungselements 14 gelangen kann, insbesondere wenn das Ringelement durch Spritzguss (insbesondere 2K-Spritzguss) oder durch Über-/Anspritzen an ein als Einlegeteil ausgebildetes Führungselement hergestellt wird. Dies ist insbesondere von Vorteil, damit an das Führungselement nur von einer Seite aus ein Anguss angelegt werden soll. In den Durchgangsbohrungen 70 ist also bei dem Dichtring auch Dichtungsmaterial angeordnet, das den Dichtbereich 20 und den Abstreifbereich 22 verbindet.

Alternativ zu den Durchgangsbohrungen 70 ist in einer anderen Ausgestaltung des Führungselements 14a, wie es in Figur 6 in einer Seitenansicht gezeigt ist, die in radialer Richtung außen liegende Oberfläche 72 des Führungselements 14a mehrfach in axialer Richtung durchbrochen, so dass auch in diesen Durchbrüchen 74 Dichtungsmaterial des Ringkörpers 12 bei der Herstellung eingebracht werden kann. Die gestrichelten Linien 75 zeigen verdeckte Kanten von Schnapphaken, die nachfolgend näher erläutert werden.

Weiter kann in einer alternativen Ausgestaltung das Führungselement so ausgestaltet sein, dass die in radialer Richtung innen liegende Oberfläche des Führungselements mehrfach in axialer Richtung durchbrochen ist, so dass in den dort gebildeten Durchbrüchen Dichtungsmaterial des Ringkörpers angeordnet werden kann. Denkbar ist darüber hinaus auch, dass es Führungselemente als Mischformen der beschriebenen Ausgestaltungen gibt, die also an der Außenfläche, der Innenfläche und/oder mitten durch das Führungselement (in axialer Richtung) entsprechende Durchbrüche beziehungsweise Bohrungen aufweist.

Bevorzugt weist das Führungselement 14 an seiner radial innen liegenden Oberfläche eine im Wesentlichen plane Anlagefläche 76 auf, die an der Oberfläche des beweglichen Maschinenteils 4 anliegt und dort im Betrieb eine Flächenpressung erzeugt.

Ferner ist bevorzugt in einer Ausgestaltung vorgesehen, dass die in axialer Richtung liegende vordere und/oder hintere, die genannte Anlagefläche 76 begrenzende Kante 77, 78 des Führungselements 14 angefast oder abgerundet ist, wie dies in den Figuren 1 bis 4 erkennbar ist. Diese sollen im Betrieb ein Abstreifen des Schmierfilms verhindern.

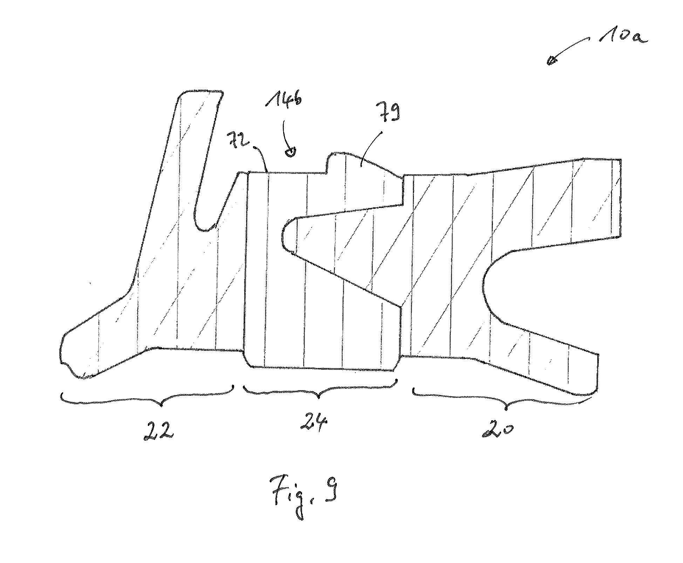

Eine weitere Ausführungsform eines Führungselements 14b ist in Figur 8 als Querschnitt gezeigt. Dieses Führungselement 14b weist an seiner radial außen liegenden Oberfläche 72 ein Halteelement 79 auf, das hier als Schnapphaken ausgebildet ist, grundsätzlich aber auch eine Art Haltevorsprung sein kann. Dieses Halteelement 79 steht über die Anlagefläche 72 nach außen in radialer Richtung vor und dient zur Einbringung in die Haltenut 54 in dem ruhenden Maschinenteil 3. Bei Verwendung eines solchen Führungselements 14b weist der Ringbereich des Dichtrings also keinen Haltewulst 60 auf, wie in den Figuren 1 bis 5 gezeigt ist, sondern die Funktion des Haltewulstes 60 wird dann durch das Halteelement 79 des Führungselements 14b übernommen. Eine Ausführungsform eines Dichtrings 10a mit einem solchen Führungselement 14b ist in Fig. 9 gezeigt.

Das Halteelement 79 kann grundsätzlich über den gesamten Umfang durchgängig ausgestaltet sein. Alternativ ist aber auch denkbar, dass das Halteelement 79 geschlitzt ausgeführt ist oder in mehrere Halteelementbereiche, beispielsweise mehrere (z.B. fünf) über den Umfang verteilte getrennte Schnapphaken, die sich jeweils einen bestimmten Winkelbereich (z.B. 10°) erstrecken, unterteilt ist. Ansonsten ist das Führungselement 14b grundsätzlich in gleicher Weise ausgestaltet wie das oben beschriebene Führungselement 14. Grundsätzlich erfolgt die konkrete Ausgestaltung danach, dass die Montage möglichst einfach und die axiale Haltekraft möglichst hoch sein soll.

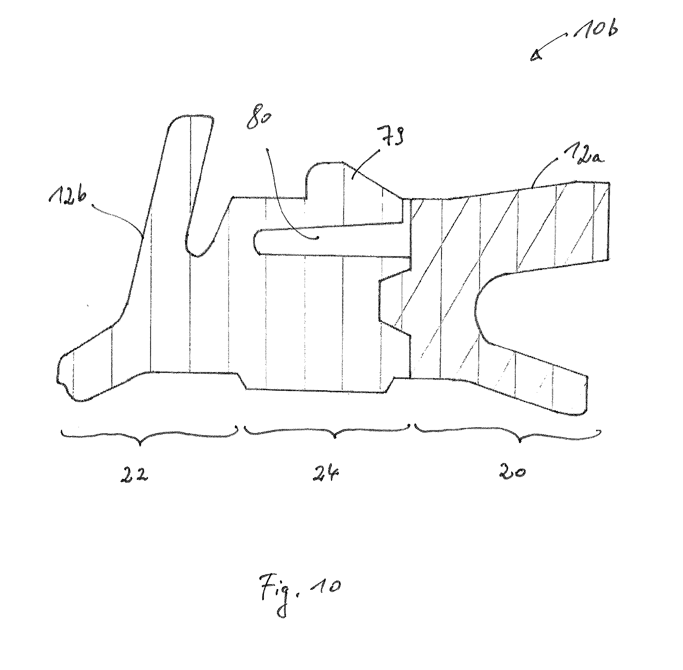

Eine weitere Ausführungsform eines erfindungsgemäßen Dichtrings 10b ist in Figur 10 gezeigt. Bei dieser Ausführungsform ist der Ringkörper in zwei getrennte Ringkörperelemente 12a, 12b geteilt, die nicht stoffschlüssig miteinander verbunden sind. Eine geteilte Ausführungsform ist dann vorteilhaft, wenn die eingesetzten Werkstoffe des Abtreifer-/Führungsteils und des Dichtungsteils sich nicht stoffschlüssig miteinander verbinden lassen und/oder für den Abstreiferteil ein ähnlich harter Werkstoff wie für den Führungsteil eingesetzt werden soll. Unterhalb des als Schnapphaken ausgebildeten Halteelements 79 ist dort im Führungsbereich ein Freiraum 80 gebildet, die eine federnde Bewegung des Schnapphakens 79 ermöglicht. Ansonsten ist der Dichtring 10b grundsätzlich in gleicher Weise ausgebildet wie oben beschrieben in Bezug auf den Dichtring 10.

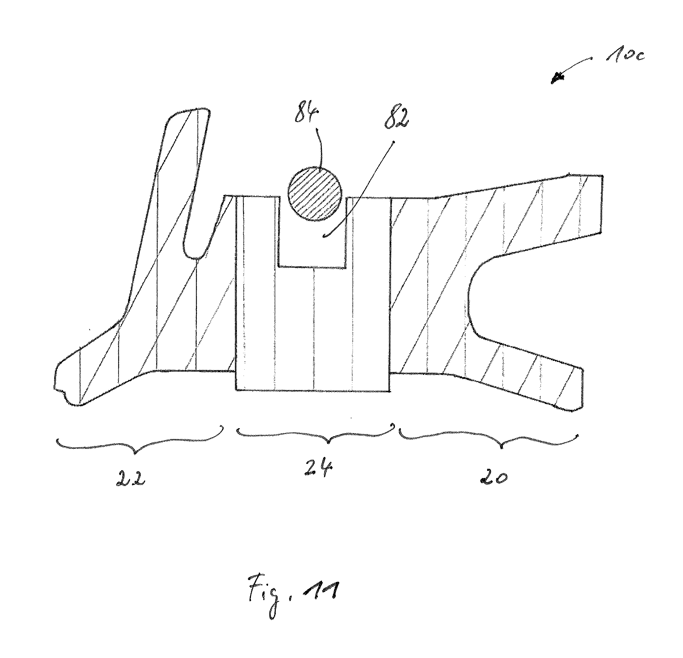

Noch eine weitere Ausführungsform eines erfindungsgemäßen Dichtrings 10c ist in Figur 11 gezeigt. Bei dieser Ausführungsform ist der Führungsbereich 24 anders ausgestaltet. Dieser weist zum ruhenden Maschinenteil hin weisend eine Nut 82 auf, in die ein Sprengring 84 komprimiert werden kann. Dieser Sprengring 84 ist beispielsweise ein Runddrahtsprengring, alternativ ein Kunststoff- oder Metallring, der radial nach außen in die Haltenut 54 des ruhenden Maschinenteils einschnappt.

Grundsätzlich ist vorgesehen, dass der Ringkörper 12 aus einem weicheren Material hergestellt ist als das Führungselement 14. Beispielsweise besteht das Ringelement 12 aus einem im Spritzgießverfahren verarbeitbarem Werkstoff, insbesondere Polyurethan oder Elastomer. In diesem Fall kann das Führungselement als Einlegeteil in einer Spritzgießform mit dem Werkstoff überspritzt werden, was zu einer stoffschlüssigen und je nach Ausführungsform auch formschlüssigen Verbindung zwischen Ringelement und Führungselement führt. Sofern das Führungselement ebenfalls aus einem im Spritzgießverfahren verarbeitbarem Werkstoff besteht, können beide Elemente auch in einem 2K-Spritzgießprozess hergestellt werden.

Das Führungselement 14 besteht bevorzugt aus thermoplastischem Kunststoff, Duromer, Hartgewebestoff, faserverstärktem Thermoplast, faserverstärktem Duromer oder Metall, insbesondere Bronze. Ferner ist in einer Ausgestaltung vorgesehen, dass die Abstreiflippe 40 aus dem gleichen Werkstoff hergestellt ist wie das Führungselement 14. Ferner kann in dem Fall, in dem das Führungselement 14 ein Einlegeteil ist, zuvor einer Plasmabehandlung unterzogen werden. Dadurch kann die Haftung des zu überspritzenden Materials auf dem Führungselement 14 verbessert werden, also die Haftung zwischen dem Führungselement 14 und dem Ringkörper 12.

Insgesamt hat der erfindungsgemäß vorgeschlagene Dichtring den Vorteil, dass er eine integrierte Führung aufweist, so dass in der Dichtungsanordnung, umfassend den Dichtring sowie das bewegliche und das ruhende Maschinenteil, auf eine weitere Führungsnut und Führung grundsätzlich verzichtet werden kann. Dies ermöglicht es, Zylinder (ruhende Maschinenteile) mit geringerer Baulänge sowie geringerem Gewicht herzustellen, als es mit Dichtringen der bekannten Art möglich wäre. Kolbenstangen werden oft mit sogenannten Führungsringen oder Führungsbändern geführt. Für die Aufnahme solcher Führungselemente ist eine entsprechende Nut vorzusehen. Die radialen Kräfte werden von der Kolbenstange über das Führungselement und über den Nutgrund in das Gehäuse eingeleitet. Axiale Kräfte entstehen durch Reibung zwischen Kolbenstange und Führungselement. Diese axialen Kräfte werden durch die seitlichen Begrenzungen der Nut, den Nutflanken, in das Gehäuse eingeleitet.

Wie bereits erwähnt, ist die Erfindung nicht auf die gezeigten Ausführungsbeispiele beschränkt. Insbesondere kann die Ausgestaltung der einzelnen Elemente des Dichtrings je nach praktischem Anwendungsfall und dem vorgesehenen Einbauraum auch anders ausfallen. Grundsätzlich ist es möglich, den Dichtring zum Einbau in jeden beliebigen Einbauraum auszuformen.

## Patentansprüche

1. Dichtring (10) zur Aufnahme in einem Einbauraum (5) zwischen einem ruhenden Maschinenteil (3) und einem beweglichen Maschinenteil (4), umfassend
- einen Ringkörper (12) mit
i) einem Dichtbereich (20) mit einer statischen Dichtlippe (30) und einer dynamischen Dichtlippe (32),
ii) einem dem Dichtbereich gegenüber angeordneten Abstreifbereich (22) mit einer Abstreiflippe (40) zur Anlage an dem beweglichen Maschinenteil (4) und einem Schmutzschild (42) zur Anlage an dem ruhenden Maschinenteil (3), und
iii) einem zwischen Dichtbereich (20) und Abstreifbereich (22) angeordneten Führungsbereich (24), und
- ein Führungselement (14), das in dem Führungsbereich (24) zur Anlage an dem beweglichen Maschinenteil (4) angeordnet ist.

2. Dichtring nach Anspruch 1,
**dadurch gekennzeichnet, dass** die in radialer Richtung außen und/oder innen liegende Oberfläche (72, 76) des Führungselements (14a) mehrfach in axialer Richtung durchbrochen ist und dass die Durchbrüche (74) mit Material des Ringkörpers (12) gefüllt sind.

3. Dichtring nach einem der vorstehenden Ansprüche,
**dadurch gekennzeichnet, dass** das Führungselement (14) mehrere in axialer Richtung verlaufende Durchgangsbohrungen (70) aufweist und dass die Durchgangsbohrungen (70) mit Material des Ringkörpers (12) gefüllt sind.

4. Dichtring nach einem der vorstehenden Ansprüche,
**dadurch gekennzeichnet, dass** der Führungsbereich (24) an seiner zur Anlage an dem ruhenden Maschinenteil (3) vorgesehenen Oberfläche einen vorstehenden Haltewulst (60) zur Einbringung in eine entsprechende Haltenut (54) in dem ruhenden Maschinenteil (3) aufweist.

5. Dichtring nach einem Anspruch 4,
**dadurch gekennzeichnet, dass** das Führungselement (14) in axialer Richtung teilweise unterhalb des Haltewulstes (60) angeordnet ist und dort eine in radialer Richtung geringere Dicke aufweist als der nicht unterhalb des Haltewulstes (60) angeordnete Teil des Führungselements (14).

6. Dichtring nach Anspruch 5,
**dadurch gekennzeichnet, dass** der in axialer Richtung unterhalb des Haltewulstes (60) angeordnete Teil des Führungselements (14) eine Ausnehmung, insbesondere eine Fase, aufweist.

7. Dichtring nach einem der Ansprüche 4 bis 6,
**dadurch gekennzeichnet, dass** der Haltewulst (60) in Umfangsrichtung durchgängig ausgestaltet ist oder in mehrere Haltewulstbereiche unterteilt ist.

8. Dichtring nach einem der Ansprüche 1 bis 3,
**dadurch gekennzeichnet, dass** das Führungselement (14b) mindestens ein Haltelement (79), insbesondere mindestens einen Haltevorsprung, Schnapphaken oder Sprengring, an seiner radial außen liegenden Oberfläche (72) aufweist, der über die zur Anlage an dem ruhenden Maschinenteil (3) vorgesehene Oberfläche (62) des Führungsbereichs (24) vorsteht und zur Einbringung in eine entsprechende Haltenut (54) in dem ruhenden Maschinenteil (3) vorgesehen ist.

9. Dichtring nach Anspruch 8,
**dadurch gekennzeichnet, dass** das Halteelement (79) in Umfangsrichtung durchgängig ausgestaltet ist oder in mehrere Halteelementbereiche unterteilt ist.

10. Dichtring nach einem der vorstehenden Ansprüche,
**dadurch gekennzeichnet, dass** das Führungselement (14) eine im Wesentlichen zylindrische, insbesondere glatte, Anlagefläche (76) an seiner zur Anlage an dem beweglichen Maschinenteil (4) vorgesehenen Oberfläche zur Erzielung einer Flächenpressung aufweist.

11. Dichtring nach Anspruch 10,
**dadurch gekennzeichnet, dass** die in axialer Richtung liegende vordere und/oder hintere, die Anlagefläche (76) begrenzende Kante (77, 78) des Führungselements (14) angefast oder abgerundet ist.

12. Dichtring nach einem der vorstehenden Ansprüche,
**dadurch gekennzeichnet, dass** der Führungsbereich (24) eine im Wesentlichen plane, in axialer Richtung verlaufende, zur Anlage an dem ruhenden Maschinenteil (3) vorgesehene Abstützfläche (62) aufweist.

13. Dichtring nach einem der vorstehenden Ansprüche,
**dadurch gekennzeichnet, dass** das Schmutzschild (42) als im Wesentlichen in radialer Richtung verlaufende Schmutzschildlippe zur Anlage an eine im Wesentlichen in radialer Richtung verlaufende Anlagefläche (53) des ruhenden Maschinenteils (3) ausgestaltet ist.

14. Dichtring nach einem der vorstehenden Ansprüche,
**dadurch gekennzeichnet, dass** das Führungselement (14) aus thermoplastischem Kunststoff, Duromer, Hartgewebestoff, faserverstärktem Thermoplast, faserverstärktem Duromer oder Metall, insbesondere Bronze, besteht.

15. Dichtring nach einem der vorstehenden Ansprüche,
**dadurch gekennzeichnet, dass** der Ringkörper (12) aus einem durch Spritzguss oder Überspritzen oder Anspritzen eines Einlegeteils herstellbaren Werkstoff, insbesondere Polyurethan oder Elastomer, besteht.
